# EUROPÄISCHE PATENTANMELDUNG

(11) **EP 0 652 611 A1**
(43) Veröffentlichungstag der Anmeldung: **10.05.1995**
(21) Anmeldenummer: 94117263.7
(22) Anmeldetag: 02.11.1994
(51) Int. Cl.: H01R 43/02, H01R 23/02

(54) **Steckaufnahme für eine Fernsprechstation**

(30) Priorität: 09.11.1993 DE 9317133 U
(71) Anmelder: SIEMENS AKTIENGESELLSCHAFT, D-80333 München (DE)
(72) Erfinder: Kaiser, Jürgen, Dipl.-Ing., D-46485 Wesel (DE); Reuschel, Jürgen, D-46399 Bocholt (DE)

(57) **Zusammenfassung**

In Fernsprechstationen zur Anwendung gelangende und mit einer innerhalb der Station angeordneten Leiterplatte (11, 12) kontaktierte Steckaufnahme (1) zum Anschluß von mit entsprechenden Steckern abgeschlossenen Leitungen.
Die Steckaufnahme soll so ausgebildet sein, daß sie in rationeller Weise mit der Leiterplatte (11, 12) mechanisch und elektrisch verbunden werden kann.
Zu diesem Zweck ist die Steckaufnahme (1) so gestaltet, daß sie universell bei einseitig oder zweiseitig mit Leiterbahnen versehenen Leiterplatten (11, 12) mittels des Reflow-Lötverfahrens befestigbar ist.

## Beschreibung

Die vorliegende Erfindung beinhaltet eine in Fernsprechstationen zur Anwendung gelangende und mit einer innerhalb der Station angeordneten Leiterplatte kontaktierte Steckaufnahme zum Anschluß von mit entsprechenden Steckern abgeschlossenen Leitungen.

Derartige Steckaufnahmen dienen zur Aufnahme von steckbaren Anschlußschnüren vom Handapparat oder der Amtsleitung der Fernsprechstation und sind bei Fernsprechstationen neuerer Bauart über Schächte in der Bodenwanne des Gerätes zugänglich. Die Steckaufnahmen weisen eine ihrer Benutzungsart entsprechende Anzahl von Lötstiften auf, deren Leiterplattenanschlußbereich bisher in Steckrichtung verlaufend an der Außenseite des Steckanschlusses vorgesehen ist. Die Außenanschlüsse der Lötstifte werden durch entsprechende die Leiterbahnen durchsetzende Durchbrüche hindurchgeführt und in einem anschließenden Lötvorgang mit den Leiterbahnen der Leiterplatte kontaktiert. Eine mechanische Sicherung der Steckaufnahme erfolgte in der Regel durch weitere an der Aufnahme angeordnete Rastmittel, z. B. in Form von Rasthäkchen, die mit entsprechenden, an der Leiterplatte vorgesehenen Gegenrasten, z. B. Rastaufnahmen zusammenarbeiteten.

In zunehmendem Maße werden rationellere Fertigungsmethoden angestrebt, die eine deutliche Kostensenkung der Produkte zur Folge haben sollen. So werden die Leiterbahnen auf die Leiterplatte im an sich bekannten Siebdruckverfahren aufgebracht und die mit der Leiterplatte zu kontaktierenden Bauteile mittels einer Lötpaste in Form eines sehr feinkörnigen Lötgranulats auf den Leiterbahnen befestigt. Anschließend werden die Bauteile durch kurzfristige hohe Hitzeeinwirkung im Reflow-Lötverfahren mit der Leiterplatte kontaktiert.

Aufgabe der vorliegenden Erfindung ist es, die Steckaufnahme so zu gestalten, daß sie in rationeller Weise mit der Leiterplatte mechanisch und elektrisch verbunden werden kann.

Diese Aufgabe wird dadurch gelost, daß die Steckaufnahme bezuglich ihrer elektrischen und mechanischen Verbindung mit der Leiterplatte so gestaltet ist, daß sie universell bei einseitig oder zweiseitig mit Leiterbahnen versehenen Leiterplatten mittels des Reflow-Lötverfahrens befestigbar ist.

Ausgehend von der zuvor beschriebenen Reflow-Löttechnik ist die Steckaufnahme einmal bezuglich ihrer elektrischen Anschlüsse so gestaltet, daß sie vor dem Reflow-Lötvorgang mittels der Lotpaste mit den Leiterbahnen der Leiterplatte fixiert werden kann. Gleichzeitig trägt ein der mechanischen Sicherung der Steckaufnahme dienender Bereich der Steckaufnahme dazu bei, mittels des Reflow-Lötverfahrens die Steckaufnahme an der Leiterplatte so festzulegen, daß auch wiederholte Steck- und Ziehvorgange stets einen sicheren Halt der Steckaufnahme an der Leiterplatte gewahrleisten. Dabei kann die mit einem Aufnahmeraum für den Stecker ausgestattete Steckaufnahme bezüglich ihrer mechanischen und elektrischen Befestigung mit der Leiterplatte so ausgestaltet sein, daß an der der Einführungsseite des Steckers abgewandten Seite der Steckaufnahme in einer senkrecht zur Steckebene verlaufenden Ebene Lötstifte sowie gegenüberliegend ein mit der Steckaufnahme verbundenes Lotblech vorgesehen sind. Da die der Kontaktierung mit dem Stecker dienenden Anschlüsse in dem Aufnahmeraum der Steckaufnahme mit den Lötstiften des Steckanschlusses einstückig verbunden sind, kann diesen Lötstiften gegenüberliegend ein der Befestigung dienendes Lötblech vorgesehen sein, das zur mechanischen Festlegung der Steckaufnahme mittels des Reflow-Lötverfahrens an der Leiterplatte dient. Zu diesem Zweck kann das Lotblech winkelförmig gestaltet sein, wobei sein einer Schenkel innerhalb der Steckaufnahme gehaltert ist, wahrend sein anderer Schenkel parallel zu den Lötstiften und in deren Ebene verlaufend angeordnet ist und im kontaktierten Zustand der Steckaufnahme in zumindest einem Punkt mit der Leiterplatte verbunden ist. Mittels dieses Lötbleches wird gewährleistet, daß eine zusätzliche mechanische Befestigung der Steckaufnahme an der Leiterplatte erzielt wird. Dabei besteht die Möglichkeit, die Befestigungszone für die Steckaufnahme so zu gestalten, daß neben einer partiellen Verbindung auch eine Verbindung über die gesamte Breite der Steckaufnahme zustandekommt. Um eine exakte Lagezuordnung der für den jeweiligen Anwendungsfall erforderlichen Lötstifte an der Steckaufnahme zu realisieren, können gemaß einer weiteren Ausgestaltung der Erfindung die Lötstifte in Kammern eines mit der Steckbuchse einstückig verbundenen Absatzes beabstandet zueinander gehaltert sein.

Bei einer nur einseitig mit Leiterbahnen versehenen Leiterplatte, die fertigungsmäßig preiswert und rationell herstellbar ist, kann eine optimale Befestigung der Steckaufnahme mit der Leiterplatte dadurch erreicht werden, daß die Leiterplatte einen den Abmessungen der Steckaufnahme entsprechenden Durchbruch aufweist, der die Steckaufnahme aufnimmt.

Die Erfindung soll im folgenden anhand eines Ausführungsbeispieles naher erläutert werden.

Es zeigt
Figur 1 die Steckaufnahme in einer perspektivischen Ansicht,
Figur 2 den Einbau der Steckaufnahme nach Figur 1 in einer beidseitig mit Leiterbahnen versehenen, durchkontaktierten Leiterplatte,
Figur 3 den Einbau der Steckaufnahme in eine einseitig mit Leiterbahnen versehene Leiterplatte in einer Aufsicht,
Figur 4 schematisch die mögliche Anordnung der gedruckten Leiterbahnen und der Befestigungspunkte für die Steckaufnahme an der Leiterplatte in einer Aufsicht,
Figur 5 die Festlegung der Steckaufnahme in einer einseitig mit Leiterbahnen ausgestatteten Leiterplatte in einer geschnittenen Seitenansicht.

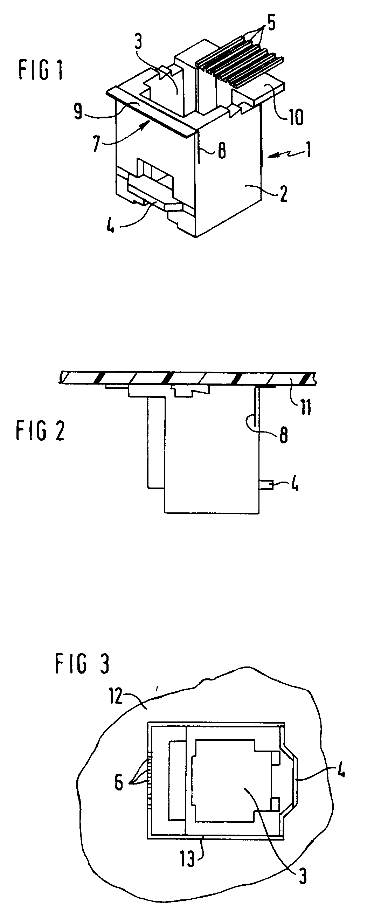

Die in Figur 1 dargestellte Steckaufnahme 1 soll so gestaltet sein, daß sie an einseitig oder zweiseitig mit Leiterbahnen versehenen Leiterplatten mittels der SMD-Technik befestigbar ist. Mittels dieses Lötverfahrens werden Bauelemente auf die Leiterbahnen einer Leiterplatte mit einer elektrisch leitfähigen Paste fixiert und anschließend in einem sogenannten Reflow-Ofen durch kurzfristige hohe Hitzeeinwirkung mit der Leiterplatte kontaktiert. Die Steckaufnahme 1 für einen ihr formmäßig entsprechenden und den Abschluß einer Zuleitung (z. B. Handapparat oder Anschlußleitung einer Fernsprechstation) bildenden Stecker besteht aus einem etwa quaderförmigen Gehäuse 2, das den Aufnahmeraum 3 für einen hier nicht dargestellten Stecker bildet. Dieser als Miniwesternstecker bekannte Stecker wird in den Aufnahmeraum 3 eingebracht und verrastet mit einer an ihm angeformten und einstückig mit ihm verbundenen federnden Rastlasche hinter dem Steg 4 des Gehäuses 2. Dabei weist der Stecker eine der Anzahl der Lötstifte 5 an der Steckaufnahme 1 entsprechende Anzahl von Kontakten auf, die im eingebrachten Zustand des Steckers die gewünschte Kontaktverbindung mit der Steckaufnahme 1 bewirken. Die Lötstifte 5 an der Steckaufnahme 1 sind dabei in einzelnen Kammern 6 eines Absatzes 10 geführt und gehaltert und ragen mit einem abgewinkelten Bereich in den Aufnahmeraum 3 der Steckaufnahme 1 hinein. Diesen Lötstiften 5 gegenüberliegend ist an der Steckaufnahme 1 ein abgewinkeltes Lötblech 7 vorgesehen, dessen Schenkel 8 innerhalb der Steckaufnahme befestigt ist, während sich der Schenkel 9 in der gleichen Ebene wie die parallel zur Oberflache der Steckaufnahme 1 verlaufenden Lötstifte 5 befindet.

In Figur 2 ist die Befestigung der Steckaufnahme an einer beidseitig mit Leiterbahnen versehenen Leiterplatte 11 dargestellt. Diese Leiterplatte 11 besitzt durchkontaktierte Leiterbahnen, die in neuerer Zeit mittels des Siebdruckverfahrens aufgebracht werden, so daß das Kontaktieren der Steckaufnahme 1 mit der Leiterplatte 11 im Reflow-Lötverfahren auf jeder Seite der Leiterplatte 11 erfolgen kann.

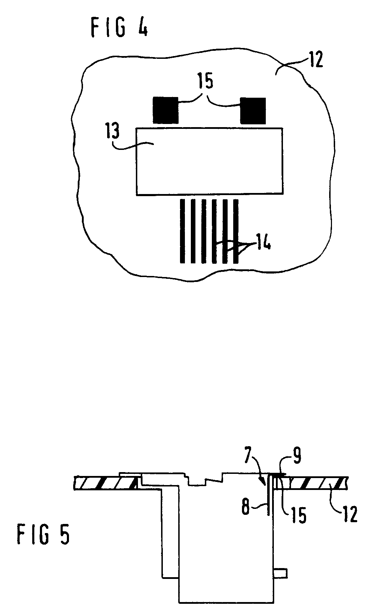

In den Figuren 3 bis 5 ist das Kontaktieren der Steckaufnahme 1 mit einer einseitig mit Leiterbahnen versehenen Leiterplatte 12 gezeigt. In dieser Leiterplatte 12 ist ein den Abmessungen der Steckaufnahme 1 entsprechende Durchbruch 13 vorgesehen, in den die Steckaufnahme 1 eingebracht wird. Wie die Figur 4 zeigt, befinden sich im Randbereich dieses Durchbruches 13 auf der Leiterplatte 12 einmal die Lötbahnen 14, die in ihrer Anzahl der Anzahl der Lötstifte 5 entsprechen. Diesen Lötbahnen 14 gegenüberliegend sind Fixierpunkte 15 auf der Leiterplatte 12 vorgesehen, die nach dem Lötvorgang eine mechanische Verbindung mit dem Schenkel 9 des Lotblechs 7 an der Steckaufnahme 1 eingehen. Die in der geschilderten Weise elektrisch und mechanisch im Reflow-Lötverfahren befestigbare Steckaufnahme kann somit universell bei einseitig und beidseitig mit Leiterbahnen versehenen Leiterplatten eingesetzt werden.

## Patentansprüche

1. In Fernsprechstationen zur Anwendung gelangende und mit einer innerhalb der Station angeordneten Leiterplatte (11, 12) kontaktierte Steckaufnahme (1) zum Anschluß von mit entsprechenden Steckern abgeschlossenen Leitungen, **dadurch gekennzeichnet,** daß die Steckaufnahme (1) bezüglich ihrer elektrischen und mechanischen Verbindung mit der Leiterplatte (11, 12) so gestaltet ist, daß sie universell bei einseitig oder zweiseitig mit Leiterbahnen versehenen Leiterplatten mittels des Reflow-Lötverfahrens befestigbar ist.

2. Steckaufnahme mit einem Aufnahmeraum (3) für den Stecker, **dadurch gekennzeichnet,** daß an der der Einführungsseite des Steckers abgewandten Seite der Steckaufnahme (1) in einer senkrecht zur Steckebene verlaufenden Ebene Lötstifte (5) sowie ihnen gegenüberliegend ein mit der Steckaufnahme (1) verbundenes Lotblech (7) vorgesehen sind.

3. Steckaufnahme nach Anspruch 2, **dadurch gekennzeichnet,** daß das Lötblech (7) winkelförmig gestaltet ist, wobei sein einer Schenkel (8) innerhalb der Steckaufnahme (1) gehaltert ist, während sein anderer Schenkel (9) parallel zu den Lötstiften (5) und in deren Ebene verlaufend angeordnet ist und im kontaktierten Zustand der Steckaufnahme (1) in zumindest einem Punkt mit der Leiterplatte (11, 12) verbunden ist.

4. Steckaufnahme nach Anspruch 2, **dadurch gekennzeichnet,** daß die Lötstifte (6) eines mit der Steckbuchse (1) einstückig verbundenen Absatzes (10) beabstandet zueinander gehaltert sind.

5. Steckaufnahme nach Anspruch 1, **dadurch gekennzeichnet,** daß die einseitig mit Leiterbahnen versehene Leiterplatte (12) einen den Konturen der Steckaufnahme (1) entsprechenden Durchbruch (13) aufweist.
